Europäisches Patentamt

European Patent Office

Office européen des brevets

(11) Publication number: **0 131 407**
**A1**

(12) **EUROPEAN PATENT APPLICATION**

(21) Application number: **84304286.2**

(22) Date of filing: **25.06.84**

(51) Int. Cl.⁴: **B 64 C 15/14**
**B 64 C 23/06**

(30) Priority: **11.07.83 GB 8318729**

(43) Date of publication of application:
**16.01.85 Bulletin 85/3**

(84) Designated Contracting States:
**DE FR IT SE**

(71) Applicant: **The Secretary of State for Defence in Her Britannic Majesty's Government of The United Kingdom of Great Britain and Northern Ireland Whitehall London SW1A 2HB(GB)**

(72) Inventor: **Mundell, Anthony Robin George 38 Conifer Close Church Crookham Hampshire(GB)**

(74) Representative: **Gunning, William John et al, Procurement Executive, Ministry of Defence Patents 1A(4), Room 1932 Empress State Building Lillie Road London SW6 1TR(GB)**

(54) Improvements in fuselage side force control.

(57) For the control of vortices generated at the nose of a fuselage (10) at a high angle of incidence, at least one orifice (12) is arranged at betwen 90-150° from bdc and very close to the nose tip for directing outward a minuscule jet of fluid.

Fig.1.

EP 0 131 407 A1

1

# IMPROVEMENTS IN FUSELAGE SIDE FORCE CONTROL

The present invention relates to the directional control of fuselages moving in fluids. It is particularly concerned with the directional control of aircraft and missile fuselages having sharp noses.

When fuselages are manoeuvred so as to adopt or pass through high angles of incidence, a pair of vortices are generated at the nose which are almost invariably uneven in their intensity or effect, giving rise to side forces which can be large and, by virtue of their location, of considerable yawing moment.

The present invention provides a fuselage with control means for overcoming these side forces, preventing their generation, or even generating them in controlled fashion. The essence of the present invention is that provided jet orifices are sited within a very short distance of the nose tip and strategically one either side of the plane of incidence of the fuselage, only minuscule quantities of fluid will act as a trigger to control, prevent or attenuate the side forces generated by assymmetric vortices.

According to the present invention a fuselage has, at a location a very short distance from the nose tip thereof a jet orifice adapted for operation at an angle to the plane of incidence of the fuselage,

means for pumping a fluid out of the said orifice, and

means for directing the jet.

A pair of orifices may be disposed symmetrically about the plane of incidence approximate the flow separation location. Typically the orifices are located within the range 80°-150° circumferentially from bottom dead centre (bdc) of the said plane. In the case of a fuselage with no particular plane of incidence however, such as may occur with a missile as distinct from an aircraft fuselage, there may be a ring of jet orifices at perhaps 20° intervals around the fuselage. In this case the jet direction control means operate to select through which of the orifices to pump the fluid. Alternatively one orifice, or a symmetrical pair of orifices, may be located in a rotatable portion of the nose cone. In this case the jet direction control means may operate to rotate the orifice or orifices to the required configuration, and perhaps to select an orifice as well.

The fluid is preferably similar to that in which the fuselage is intended to move, that is a gas in the case of an aircraft or missile fuselage. The gas may be engine bleed air or bottled air or nitrogen, inter alia.

The means for directing the jet may comprise simply a connection with an aircraft steering advice, eg a rubber bar. It may however be automatic and include a sensor of plane of incidence, such as perhaps an accelerometer input arranged to pass in signals relating to yawing and pitching rotations of the fuselage and airspeed and control configuration inputs. Of particular advantage in contexts where radar interference may otherwise be a problem is the fact that such minute fluid flow quantities permits the use of plastics rather than metal in the means for directing the jet. The means may be arranged to control both the direction and the magnitude of the fluid jet.

As related to a wind tunnel aircraft model 1.24 metres in length, having a mainplane area of 0.2678 square metres and tested at 70 metres/sec air mass flow rates between 0.005 and 0.02 grams per second were adequate to control vortex generated side force at angles of incidence up to 50°, when directed appropriately through a 1 mm diameter orifice, 5 mm from the nose tip. In terms of the non-dimensional mass flow coefficient Cμ based on wing area,

$$\left( \quad C\mu \; = \; \frac{\text{Mass flow rate} \times \text{Jet velocity}}{\text{Freestream dynamic pressure} \times \text{Wing Area}} \quad \right)$$

this range of flow rates corresponds to a Cμ between $5{\times}10^{-8}$ and $1{\times}10^{-6}$.

Apparatus in accordance with the present invention will now be described by way of example, with reference to the accompanying drawings, of which

Figure 1 is a schematic diagram of side force control means on an aircraft fuselage,

Figure 2 is a schematic diagram of side force control means on a missile fuselage,

Figures 3 a-d are graphs showing the effect on side force of port and starboard jets at various angles around the fuselage, 5 mm from the nose, at various angles of incidence and

Figure 4 is a graph showing the effect on side force of a jet at 120° port from bdc, 18 mm from the nose, at various angles of incidence.

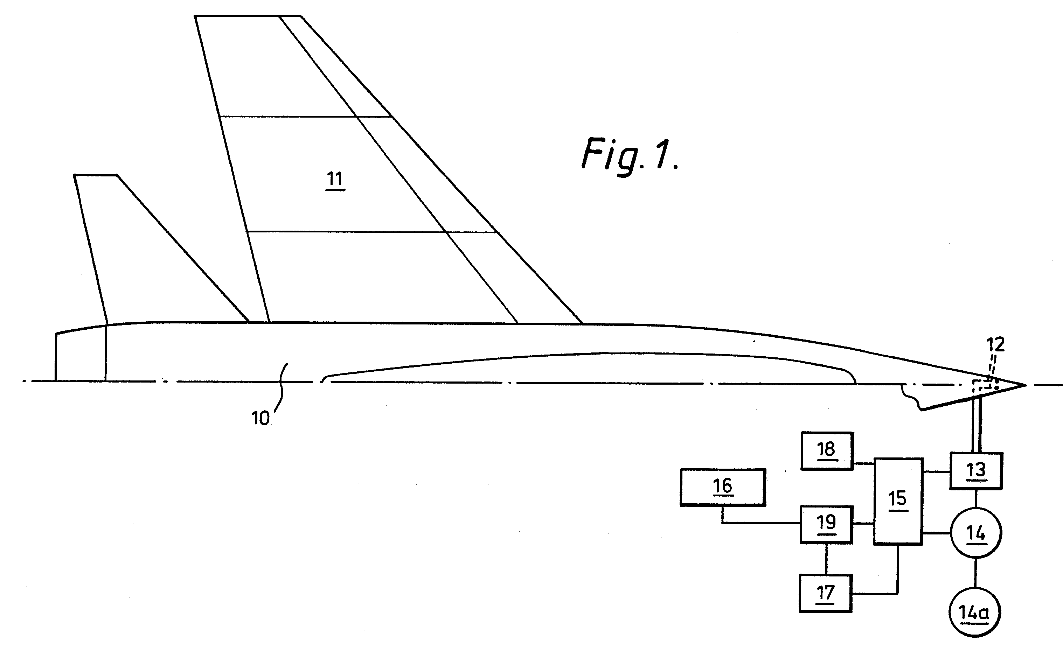

Figure 1 is a schematic view of half of an aircraft in plan, including a fuselage 10 and a main-plane 11. The fuselage 10 has a pointed conical nose. At a short distance from the nose tip are a pair of orifices 12, located on the port and starboard sides respectively, typically between 120° and 150° from fuselage bottom dead centre (bdc), the outlets of radially outwardly directed air jets.

The air jets are associated via jet selector 13 and a pressure regulator 14 with an air supply 14a. The selector 13 and the regulator 14 are arranged for control by a computer 15, which is connected to an incidence detector 16, and a side force and yawing moment detector 17, an airspeed detector 18 and a control demand discriminator 19. The discriminator 19 is arranged to pass signals to the computer 15 relating to the configuration of manoeuvre controls such as aileron and rudder.

In one mode of operation of the device, when a high incidence is detected, and the discriminator 19 concludes that the measured side force yawing moment or yaw angle is not consistent with the pilot's manoeuvre control demands, the computer 15 directs that a jet of air be forced from the appropriate orifice 14. In another mode of operation of the device, when a steering manoeuvre is detected, the computer 15 directs that a jet of air consistent with the instantaneous incidence and airspeed be forced from an orifice 14 to assist in the manoeuvre.

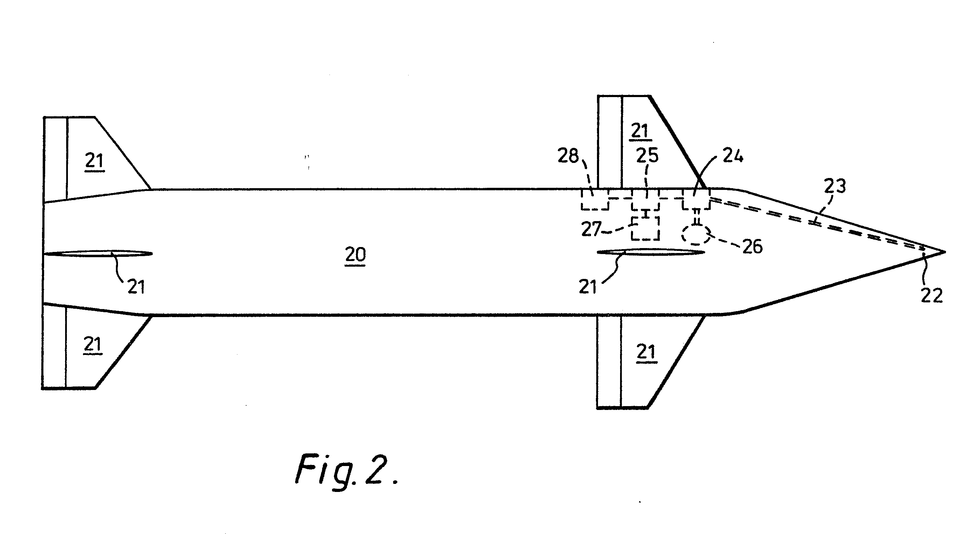

Figure 2 shows a guided missile having a fuselage 20 with a pointed nose and control surfaces 21. Very close to the nose tip is a ring of equiangularly spaced orifices 22 for radially outwardly directed gas jets. Each of these jets is linked by a separate conduit 23 made of plastics tubing, to a jet selector 24 associated with a computer 25 and a source 26 of gas at pressure. The computer 25 is arranged to receive input signals from an accelerometer array 27 and a steering detector 28, the latter being arranged to sense the required missile steering directions and manoeuvre control configurations.

In operation when a large incidence is detected in one plane and an uncommanded side force or yawing moment is detected in an orthogonal plane by the accelerometer array 27, the computer 25 commands gas to be directed through an appropriate jet so as to annul the difference between the commanded and the measured response.

In a particular example of a missile as shown in Figure 2 the source 26 of gas at pressure is a missile controls hydraulic accumulator relief valve as described in co-pending UK patent application 8315686.

5

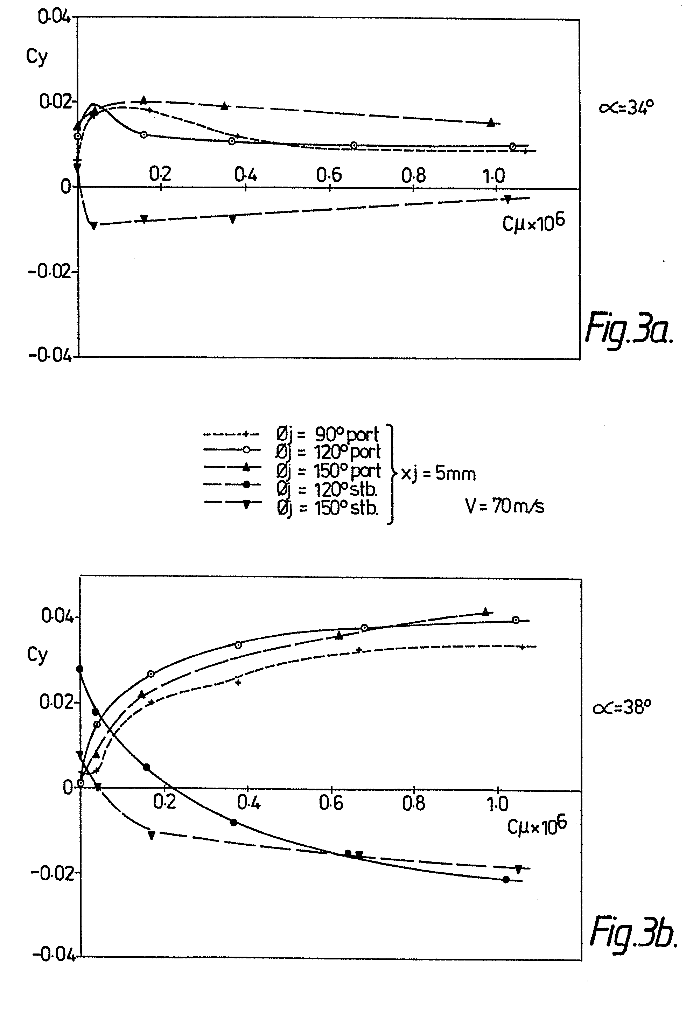

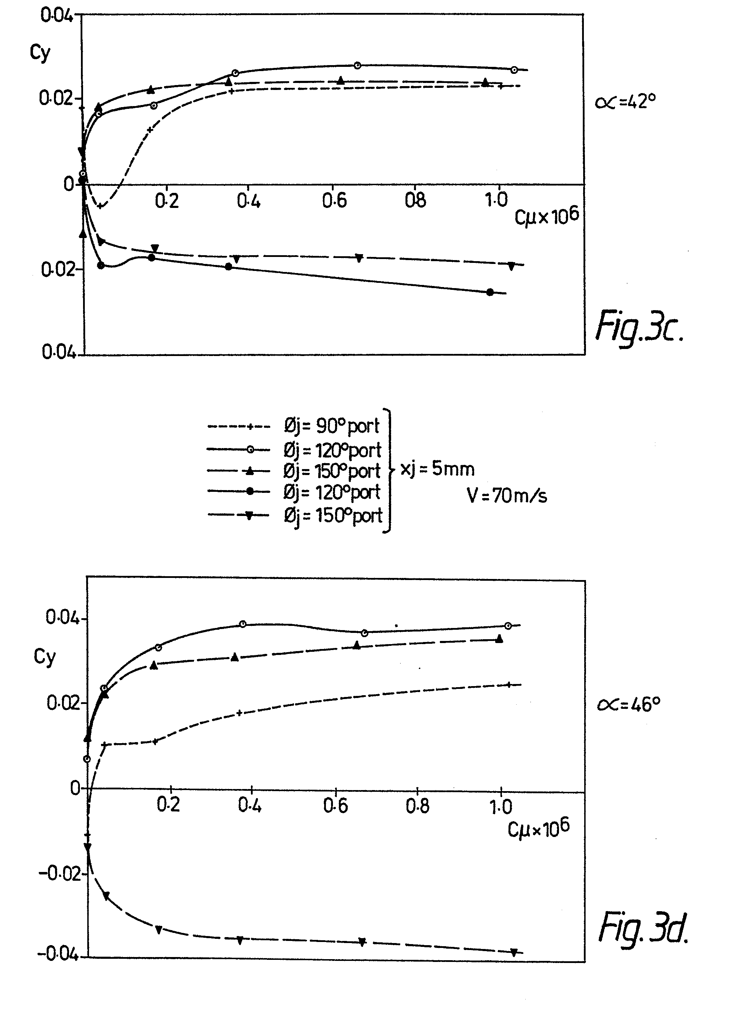

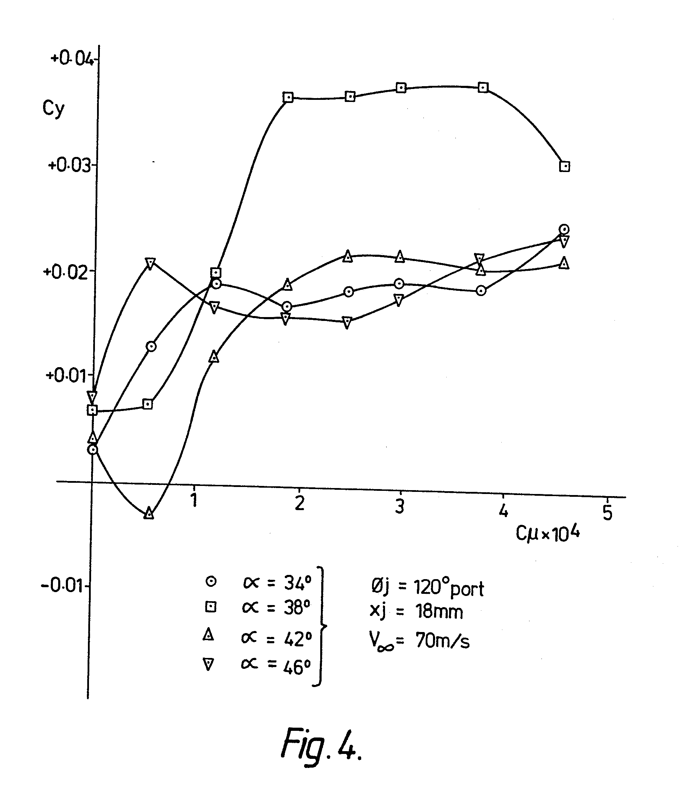

The Figures 3 and 4, the import of which is now to be discussed, relate to wind tunnel tests on a model similar to that illustrated in Figure 1. The model had an overall length of 1.24 metres and a span of 0.94 metres. Its total mainplane area was 0.2678 square metres. All the tests discussed were carried out at a tunnel air velocity of 70 metres per second.

For the tests the results of which are illustrated in Figures 3 a-d, the jet orifice was situated at $x_j$ = 5 mm from the nose point and was adjustable to the various circumferential jet angles $\emptyset_j$ indicated. The figures show that at the incidences shown, when there is no jet in operation ($C\mu$ = 0), a side force is usually generated at the nose. This is due to the setting up of an asymmetric vortex pattern which occurs when the incidence exceeds approximately half the included angle of the pointed nose tip. The magnitude of the force and whether it is positive (to starboard) or negative (to port) will depend on minute surface and flow pertubations. The random and unpredictable side forces (coefficients ($C_y$) of up to 0.03) which occur with no jet in operation in the incidence range tested are large enough to give difficulty in controlling an aircraft. At the lower incidence (34°), where the side force is relatively small, a jet at practically any angle and of magnitude ($\mu$ = 0.2 × $10^{-6}$) has an effect, a positive side force can be substantially attenuated by a starboard jet, and vice versa.

At incidence from 38°-48° a port side jet at any angle between 90° and 150° and of magnitude as little as $C\mu$ = 0.2× $10^{-6}$ can give rise to quite large side forces ($C_y$ = 0.02-0.04). Clearly the jet produces a controllable flow perturbation which fixes the magnitude and the sign of the side force enabling the side force to be controlled.

Figure 4 illlustrates the results obtained at various incidences when the jet was at $X_j$ = 18 mm and $\emptyset_j$ = 120° port. Once again substantial initial side forces were evident, and for incidences below 50°, but only a jet of magnitude between

$C\mu = 0.5\times10^{-4}$ and $2.0\times10^{-4}$ had a significant influence. Comparing these values with those illustrated in Figures 3 a-d shows that substantially smaller jet mass flows are required when the holes are close to the nose tip.

It will be appreciated that the invention derives its modus operandi not from the direct effect of the jet momentum but from the modifying or trigger effect the jet has upon the vortices generated at incidence. The results show clearly that quite minuscule jets in mass flow terms can have a very significant effect provided they are very close to the nose, eg less than one centimetre.

It is known that small surface imperfections at the nose tip have a large influence on the development of asymmetric vortices. The nose jets described here provide a controllable asymmetry super-imposable upon the effects of the natural surface imperfections already existing. Because the modus operandi of the jet is modifying or triggering rather than direct, the required hole size, its distance aft of the tip, and the required mass flow, will depend rather upon the degree of nose surface precision whatever the size of the aircraft than upon aircraft size.

1

CLAIMS

1.  A fuselage having

at a location a very short distance from the nose tip thereof a jet orifice adapted for operation at an angle to the plane of incidence of the fuselage,

means for pumping a fluid out of the said orifice, and

means for directing the jet.

2.  A fuselage as claimed in claim 1 and having a pair of the said orifices disposed symmetrically about the plane of incidence.

3.  A fuselage as claimed in claim 2 and wherein the orifices are located within the range 80°-150° circumferentially from bottom dead centre (bdc) of the said plane.

4.  A fuselage as claimed in claim 1 and having a plurality of the said orifices at intervals in a ring around the nose.

5.  A fuselage as claimed in claim 4 and wherein direction control means is adapted to select through which of said orifices to pump the fluid.

6.  A fuselage as claimed in claim 1 or claim 2 having a rotatable nose cone carrying it or the orifices and wherein the jet direction control means is adapted to rotate the cone.

7.  A fuselage as claimed in claim 6 and wherein the jet direction control means is also adapted to select an orifice.

8.  A fuselage as claimed in any one of the preceding claims and wherein the fluid is a gas.

9.  A fuselage as claimed in any one of the preceding claims and wherein the means for directing the jet is operably associated with a fuselage steering device.

10.  A fuselage as claimed in any one of the preceding claims and wherein said means for directing the jet incorporates sensors of plane and incidence, airspeed and control configurations.

11.  A fuselage as claimed in any one of the preceding claims and wherein those parts of the fluid ducting and direction means located in the nose of the fuselage are constructed of non-metallic material.

Fig.1.

0131407

*Fig.2.*

Fig.3a.

∝=34°

- − − + Øj = 90° port  
- —○— Øj = 120° port  
- — ▲ — Øj = 150° port  
- — ● — Øj = 120° stb.  
- — ▼ — Øj = 150° stb.  

} xj = 5mm

V = 70 m/s

Fig.3b.

∝=38°

0131407

4/5

Fig.3c.

$\alpha = 42°$

Legend:
- Øj = 90° port
- Øj = 120° port
- Øj = 150° port  } xj = 5mm
- Øj = 120° port
- Øj = 150° port

V = 70 m/s

Fig.3d.

$\alpha = 46°$

0131407

Fig. 4.

## European Patent Office

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | DE-A-2 856 033  (DORNIER)  * Page 5, line 19 - page 6, last line;  page 8, line 15 - page 9, line 3; page 9, lines 8-13, 18-22; page 10, line 1 - page 11, line 6; figures 1-9 * | 1-3,5, 8-11 | B 64 C  15/14 B 64 C  23/06 |
| Y | GB-A- 890 418  (MINISTER OF AVIATION) * Page 1, lines 15-49, 64-73, 84-88;  page 2, lines 11-15, 89-107; figures 1-3 * | 1,2,8, 9 | |
| Y | EP-A-0 063 979  (THOMSON CSF) * Page 1, lines 5-14; page 3, line 32 - page 4, line 19; page 5, lines 17-20; figure 4 * | 1-5,8 | |

TECHNICAL FIELDS SEARCHED (Int. Cl. 3)

B 64 C

The present search report has been drawn up for all claims

| Place of search THE HAGUE | Date of completion of the search 12-10-1984 | Examiner ZERI A. |
|---|---|---|